(19) **Europäisches Patentamt / European Patent Office / Office européen des brevets**

(11) **EP 3 713 143 B1**

(12) **EUROPEAN PATENT SPECIFICATION**

(45) Date of publication and mention of the grant of the patent:
**22.06.2022 Bulletin 2022/25**

(21) Application number: **19164744.5**

(22) Date of filing: **22.03.2019**

(51) International Patent Classification (IPC):
**H04L 5/00** *(2006.01)* **H04B 3/32** *(2006.01)*

(52) Cooperative Patent Classification (CPC):
**H04B 3/32; H04L 5/0001; H04L 5/0053**

(54) **COMMUNICATION LINE GROUPING**

GRUPPIERUNG VON KOMMUNIKATIONSLEITUNGEN

REGROUPEMENT DE LIGNES DE COMMUNICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**23.09.2020 Bulletin 2020/39**

(73) Proprietor: **Nokia Solutions and Networks Oy 02610 Espoo (FI)**

(72) Inventors:
• **TSIAFLAKIS, Paschalis 2018 Antwerp (BE)**
• **COOMANS, Werner 2018 Antwerpen (BE)**
• **MAES, Jochen 2018 Antwerpen (BE)**

(74) Representative: **IP HILLS NV Hubert Frère-Orbanlaan 329 9000 Gent (BE)**

(56) References cited:
**EP-A1- 3 439 189 WO-A1-2009/014764 WO-A2-2012/018288**

## Description

### Technical Field

Various example embodiments relate to a network element and method for grouping communication lines between an access node and terminal nodes into point-to-multipoint groups sharing a communication bandwidth.

### Background

An access node connects upstream terminal nodes by a plurality of communication lines, for example by twisted pair cables or coaxial cables. In order to save on processing elements in the access node, the communication lines may be grouped together in so-called point-to-multipoint, P2MP, groups. Communication lines within a P2MP then share the communication bandwidth in upstream, downstream or both.

Patent document WO 2009/014764 A1 discloses point-to-multipoint grouping.

### Summary

It is an aim of the present disclosure to provide an optimal grouping of communication lines in such P2MP groups.

This object is achieved, according to a first example aspect of the present disclosure, by the network element according to claim 1.

In other words, the P2MP grouping is performed according to the spectral efficiency of the communication lines. More particular, a communication line with one of the lowest and, thus, worst spectral efficiencies is assigned together with a communication line with one of the highest and, thus, best spectral efficiencies. As further described, such combination results in a grouping with a maximized per-group full load minimum sustainable rate, i.e. the data rate that can be achieved by all terminal nodes in a P2MP group when all terminal nodes are subject to full traffic load will be maximized by performing the claimed grouping. In other words, the minimum sustainable rate is maximized. Furthermore, by decoupling the grouping process from e.g. the further bandwidth allocation, a complex joint optimization process that takes both the grouping and FDMA allocation into account is avoided. Because of this, the above described grouping and allocation is scalable to a large number of communication lines and groups. Furthermore, the above described grouping process may be performed during an initializing process of the communication lines when line characterization metrics are already known during initialization.

Spectral efficiency may be further understood as the information rate that could be transmitted over a respective communication line within a portion or the complete shared communication bandwidth. A Line characteristic may then be related to one or more measures of the spectral efficiency.

For example, the line characteristics may relate to at least one of:

- physical lengths of the respective communication lines;
- electrical lengths of the respective communication lines;
- data rates achievable over the respective communication lines;
- maximum supported frequencies of the respective communication lines;
- tone bit loadings achievable over the respective communication lines; and
- channel characteristics of the respective communication lines.

The length of a communication line, either physical or electrical, is a measure of the spectral efficiency in a wired communication system because the longer the communication line, the lower the spectral efficiency. Furthermore, the electrical length may be easily obtained in communication systems and is typically already available at initialization. More granular line characteristics such as the channel characteristics or even the possible bit loadings on a per tone basis provide a more detailed measure of the spectral efficiency allowing characterizing more complex communication systems more accurately. The maximum supported frequency is the highest frequency or tone onto which bits can be loaded.

These line characteristics may be obtained from the respective transceivers at the access node and/or terminal nodes that are connected to the respective communication lines. Alternatively, or complementary, these characteristics may be obtained from other entities within a communication system such as from a vector control entity, VCE, or more upstream from a network managing entity.

According to an example embodiment, the at least one memory and computer program code are further configured to, with the at least one processor, cause the network element to weigh the obtained line characteristics according to targeted data rates for the respective communication lines.

Not all communication lines may be treated equally, i.e. some communication lines may be allowed communication at a higher data rate than other communication lines, i.e. may be allowed to have a higher targeted data rate. By weighing the obtained line characteristics according to these unequal targeted data rates, the grouping will already take into account this inequality.

According to an example embodiment the subsets are selected such that the first communication line is selected from lowest spectral efficiency to highest spectral efficiency and combined with the second communication line selected from highest spectral efficiency to lowest quality spectral efficiency.

In other words, a first subset having the communication line with the lowest spectral efficiency and the communication line with the highest spectral efficiency is assigned to a first P2MP group. Then, a second subset having the communication line with the second lowest spectral efficiency and the communication line with the second highest spectral efficiency may be assigned to a second P2MP group. This process may be repeated until G communication lines with the lowest and and G communication lines with the highest spectral efficiency are assigned to G different P2MP groups. This assigning scheme further optimizes the minimum sustainable data rate of the communication system.

According to an example embodiment the at least one memory and computer program code are further configured to, with the at least one processor, cause the network element to iteratively select and assign a first communication line from the G communication lines with the lowest spectral efficiency together with a second communication line from the G communication lines with the highest spectral efficiency until all N lines are assigned, or, upon a last iteration, the remaining lines are individually assigned to the G groups.

In other words, the same kind of grouping is performed for the next G or remaining communication lines with the lowest spectral efficiency and the next G or remaining communication lines with the highest spectral efficiency. This process may be repeated until all communication lines are assigned to one of the P2MP groups. This assigning scheme further optimizes the minimum sustainable data rate of the communication system.

According to an example embodiment, for each iteration, the first communication line is selected from lowest spectral efficiency to highest spectral efficiency and combined with the second communication line selected from highest spectral efficiency to lowest spectral efficiency.

Alternatively, communication lines are selected and assigned such that iterations alternate between selecting the first communication line from lowest spectral efficiency to highest spectral efficiency combined with selecting the second communication line from highest spectral efficiency to lowest spectral efficiency and, in a next iteration, selecting the first communication line from highest spectral efficiency to lowest spectral efficiency combined with selecting the second communication line from lowest spectral efficiency to highest spectral efficiency.

This way of grouping will result that the communication lines between adjacent iterations will appear as pairs with similar spectral efficiencies within the same group together with the communication line with the best and worse spectral efficiency. Within a full duplex, FDX, communication system this increases the lines of such pairs are at similar distance from the access node and experience high mutual near-end cross-talk, NEXT. By grouping such lines, the FDX spectral efficiency increases thereby freeing up spectrum for the weaker communication lines in the group.

The iterating may be further performed until, upon the last iteration, remaining communication lines with the lowest spectral efficiency are selected together with the remaining communication lines with the highest spectral efficiency.

Alternatively, or complementary, upon the last iteration, remaining communication lines are individually assigned to the different groups.

This results in an optimal grouping when, upon the last iteration, the amount of remaining lines is smaller than two times the number of groups, i.e. < 2*G.

According to example embodiments, the at least one memory and computer program code are further configured to, with the at least one processor, cause the network element to, after the grouping and upon joining of an additional communication line:

- obtain the line characteristic of the additional communication line;
- assign the additional communication line to one of the G P2MP groups according to the line characteristics of the communication lines.

Alternatively, the at least one memory and computer program code are further configured to, with the at least one processor, cause the network element to, after the grouping and upon joining of an additional communication line, regroup the N+1 communication lines into the G point-to-multipoint, P2MP, groups.

The network element according to any of claim 1 to 13 wherein the at least one memory and computer program code are further configured to, with the at least one processor, cause the network element to allocate frequency bands and/or time slots to the communication lines in the respective G point-to-multipoint, P2MP, groups.

According to a second example aspect a method according to claim 15 is disclosed.

**Brief Description of the Drawings**

Some example embodiments will now be described with reference to the accompanying drawings.

Fig. 1 shows an example embodiment of a communication system wherein communication lines are grouped into point-to-multi-point groups;

Fig. 2 shows an example of a frequency band allocation for the communication system of Fig. 1;

Fig. 3 shows an example embodiment of a point-to-multi-point grouping of communication lines;

Fig. 4 shows another example embodiment of a point-to-multi-point grouping of communication lines;

Fig. 5 shows steps executed by a network element for performing a point-to-multi-point grouping of communication lines;

Fig. 6 shows a plot with bit loadings of communication lines within a communication system;

Fig. 7 shows a plot with minimum sustainable rates of communication lines within a communication for different groupings of the communication lines; and

Fig. 8 shows an example embodiment of a suitable computing system 800 for performing one or several steps in embodiments of the invention.

**Detailed Description of Embodiment(s)**

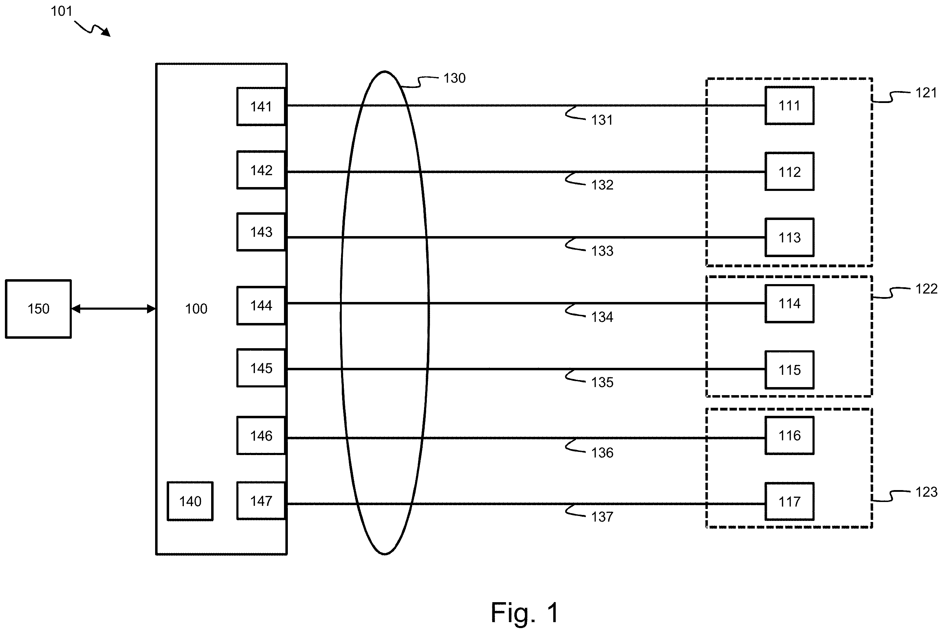

The present disclosure relates to the grouping of communication lines between an access node and terminal nodes into point-to-multipoint groups sharing a communication bandwidth within a communication system. Fig. 1 shown an example embodiment of such a communication system 101. The system comprises an access node 100 connected to terminal nodes 111-117 by respective communication lines 131-137. Access node 100 comprises transceivers 141-147 for transmitting and receiving communication signals onto and from the communication lines 131-137. Terminal nodes 111-117 also comprise such transceivers (not shown in Fig. 1). Communication system 101 is further configured to group communication lines 131-137 into point-to-multi-point, P2MP, groups, e.g. groups 121, 122, 123. Communication lines within such a P2MP group share the communication bandwidth and, hence, cannot communicate simultaneously within the same frequency band or channel and time slot. The communication system 101 may be configured to apply frequency division mechanisms to provide portions of the communication bandwidth to the different terminal nodes, e.g. apply a frequency-division multiple access, FDMA, allocation scheme. The communication system 101 may further be configured to apply time division mechanisms to provide different transmit opportunities to the different terminal nodes, e.g. apply a time-division multiple access, TDMA, scheme.

P2MP grouping of communication lines may be applied within communication systems that operate according to the G.mgfast DSL communication standard project under ITU-T SG15.

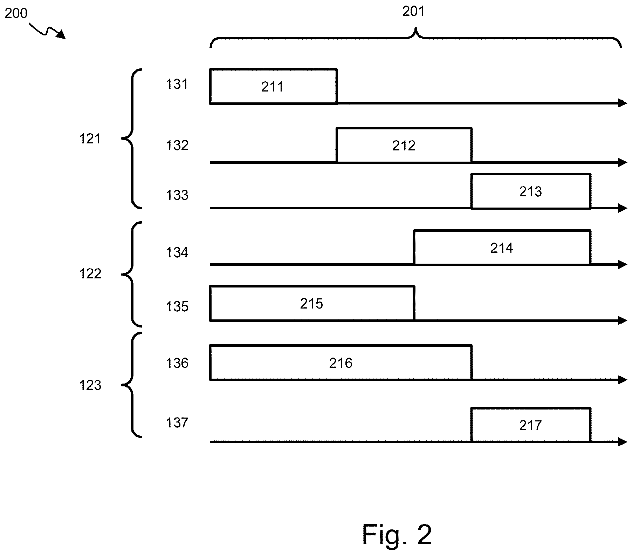

Fig. 2 shows an example of an such an FDMA allocation within communication system 101. Within group 121, communication line 131 is assigned a first lower portion 211 of the communication bandwidth 201, communication line 132 is assigned a second middle portion 212 of the communication bandwidth 201 and communication line 133 is assigned a third higher portion 213 of the communication bandwidth 201. In a similar way, within group 122, communication line 135 is assigned a first lower portion 215 of the communication bandwidth 201 and communication line 134 is assigned a second higher portion 214 of the communication bandwidth 201; and within group 123, communication line 136 is assigned a first lower portion 216 of the communication bandwidth 201 and communication line 137 is assigned a second higher portion 217 of the communication bandwidth 201.

Communication system 101 may further be partly or completely configured as a full-duplex communication system allowing simultaneous upstream and downstream communication within a same frequency band and time slot. Communication system 101 may also be configured for half-duplex communication by performing upstream and downstream communication within different time slots and/or within different frequency bands.

Communication lines 131-137 may further be partly or completely bundled in a cable bundle 130. By such bundling, communication signals from one communication line may couple as cross-talk onto other communication lines. Depending on the type of coupling the cross-talk may be referred to as near-end cross-talk, NEXT, far-end cross-talk, FEXT, and echo. At the access node 100, cross-talk may be pre- and post-compensated by vectoring. To this end, access node 100 may comprise a so-called vector control entity, VCE, 140 that is configured to determine vectoring coefficients for performing the compensation based on the channel characteristics of the communication system 101.

The main purpose of P2MP grouping is to save on resources, in particular within the access node 100, in exchange for maximum data rate of the communication system 101. For a communication system with a number of N communication lines that are to be assigned to a number of G P2MP groups, there exist a lot of possibilities. However, different groupings will result in very different performances, even when thereafter the FDMA allocation within a group is performed in the most ideal manner.

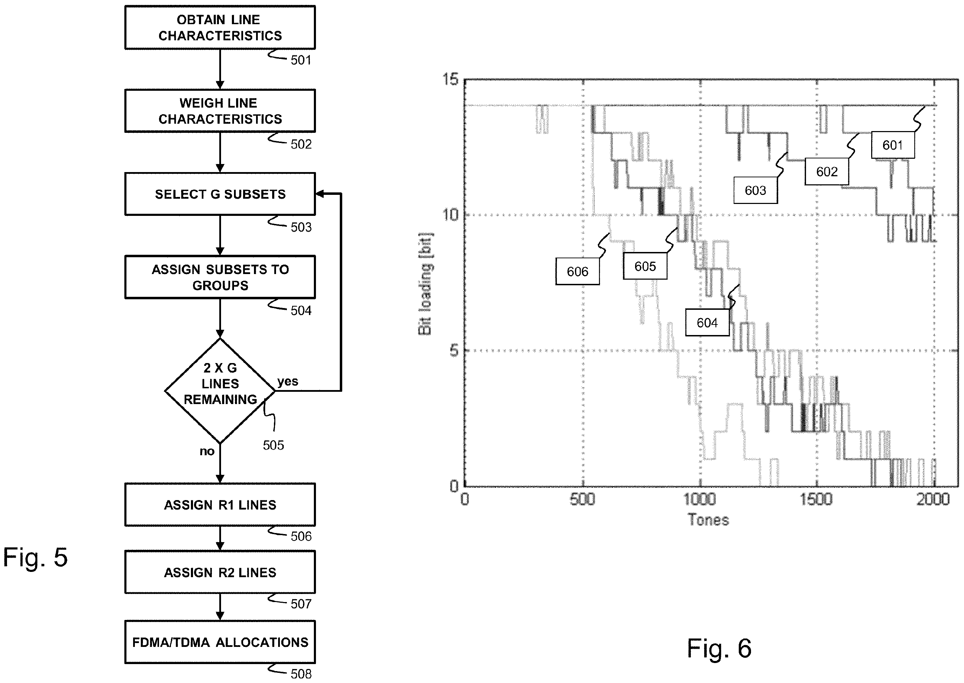

To this end, Fig. 5 illustrates steps performed for grouping N communication lines within G P2MP groups according to an exemplary embodiment. In a first step 501, line characteristics of the N communication lines are obtained. A line characteristic of a communication line is indicative for a spectral efficiency of the communication line and thereby provides an indication of the information rate that could be achieved over the communication line within a portion of or within the complete communication bandwidth. As such, the line characteristic may relate to at least one of:

- the physical length of the communication line;
- the electrical length of the communication line;
- the data rate achievable over the communication line;
- maximum supported frequencies of the respective communication lines;
- the tone bit loadings achievable over the communication line; and
- the channel characteristics of the respective communication lines.

The physical length may for example be obtained from an upstream network manager. A short communication line will typically occupy a much larger bandwidth than a longer communication line which can only communicate in the lower frequency bands. The physical length may therefore be considered inversely proportional to the spectral efficiency. The electrical length on its turn may be considered as an estimate of the loop length of the communication line which is proportional to the physical length and, hence, inversely proportional to the spectral efficiency. The electrical length may be further defined as:

$$kl_0 = AVERAGE \left( \frac{loss(f_i)_{dB}}{\sqrt{f_i}} \right) [dB/\sqrt{MHz}]$$

wherein $kl_0$ is the electrical length, k is the transmission line propagation constant, $f_i$ is a frequency within the communication bandwidth expressed in MHz, e.g., the subcarrier frequency, $loss(f_i)_{dB}$ is the signal loss over the communication line at frequency $f_i$ expressed in decibel (dB), and average is the averaging operator over all the considered frequencies $f_i$. In contrast to the physical length, the electrical length indirectly includes distortions exhibited on the communication line, e.g. cable imperfections or bridged taps. The electrical length of the communication line may be indicative for the maximum data rate that is achievable over the communication bandwidth and is considered inversely proportional to the spectral efficiency. The tone bit loadings are the amount of bits than can be loaded onto each tone of the communication bandwidth when applying an orthogonal frequency division multiplexing, OFDM, as is the case in G.mgfast. The tone bit loadings may be considered a more granular representation of the achievable data rate. The maximum supported frequency may be understood as the highest frequency or tone onto which bits can be loaded, i.e., has a bit loading greater than zero. The channel characteristics are indicative for the physical characteristics of the communication channel facilitated by the communication line. The channel characteristics may for example be expressed by a transfer function, e.g. the attenuation as a function of frequency, expressing how communication signals are influenced by the communication line.

The line characteristics may be obtained in different ways from different networking elements. The physical length may for example be obtained from a network managing entity 150 located upstream in the access network. The electrical length may be obtained from the transceivers 141-147 connected to the respective communication lines. The electrical lengths and, therefrom, the physical length may then be estimated during initializing of the communication system 101. The tone bit loadings may be retrieved from the transceivers or from the vector control entity 140. The data rate per communication band may be derived from the tone bit loadings, or reported directly by the transceivers. Other line characteristics such as channel characteristics may also be retrieved from the vector control entity 140 within the access node 140 which derives these line characteristics for cross-talk cancellation.

Optionally, the obtained line characteristics may be weighted in a next step 502 according to targeted data rates for the respective communication lines. This may be beneficial when different users of the terminal nodes have a different service level agreement, SLA, setting out a different sustainable target rate.

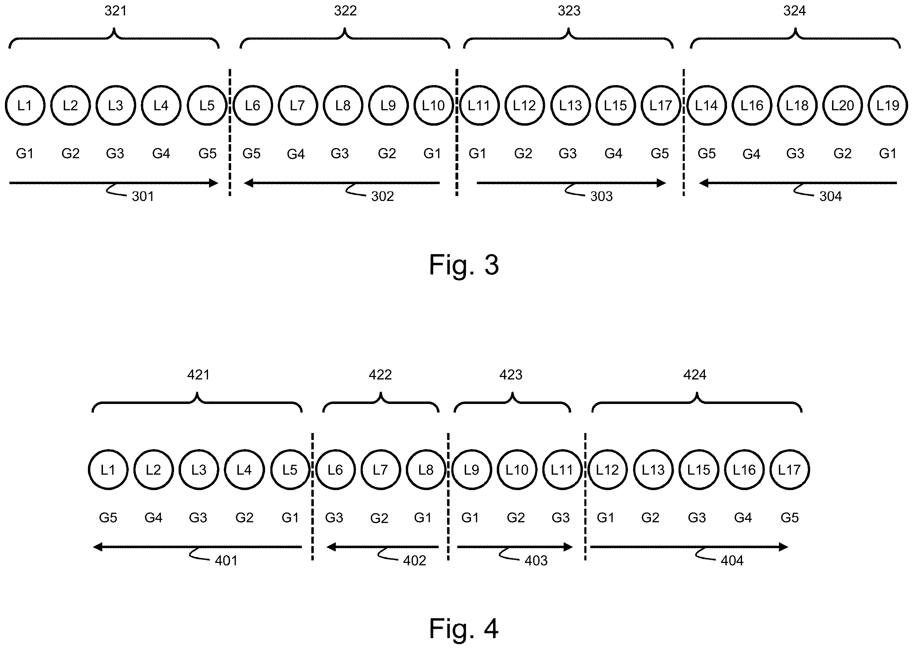

In a next step 503, subsets of the N communication lines are selected based on the obtained line characteristics. A first subset comprises a first communication line with a low spectral efficiency selected from the G communication lines with the lowest spectral efficiencies. The first subset further comprises a second communication line with a high spectral efficiency selected from the G communication lines with the highest spectral efficiencies. This selection step may then be repeated until G subsets are selected. In a next step 504, the G subsets are then assigned to the different G groups. This selection step may for example be performed as illustrated in Fig. 3 where 20 communication lines L1 to L20 are grouped into 5 groups G1 to G5 each containing four communication lines. First, the communication lines L1 to L20 are ordered according to their spectral efficiency, i.e. by increasing spectral efficiency from left to right, for example from longest to shortest physical or electrical length, i.e. with decreasing physical or electrical length from left to right. Then, the set 321 of the G communication lines with the lowest spectral efficiency and the set 324 of the G communication lines with the highest spectral efficiency are selected. Then, the subsets are created by forming pairs each comprising a communication line from the different sets 321 and 324, i.e. pairs L1-L19, L2-L20, L3-L18, L4-L16 and L5-L14. Each of these pairs is then assigned to the different P2MP groups G1-G5.

Advantageously, the selection of the subsets is performed according to a certain order 301, 304, i.e. by selecting a line from the set 321 from the lowest to highest spectral efficiency and combining this line in a subset with a line selected from the set 324 from the highest spectral efficiency to the lowest spectral efficiency. When taking the electrical length as indication of the spectral efficiency, this would result in combining the longest line L1 with the shortest line L19 and adding them to the first group G1, then combining the second longest line L2 with the second shortest line L20 and adding them to the second group G2, and repeating this until the $G^{th}$ longest line L5 is combined with the $G^{th}$ shortest line L14 and added to the $G^{th}$ group G5. Alternatively, this combining may be done the other way around as illustrated in Fig. 4, i.e. in a direction 401, 404 which results in a similar grouping of the lines 421 and 424.

According to an example embodiment, the selecting step 503 and assigning step 504 is performed iteratively. This may be done by verifying after step 504 in a step 505 that two times G ungrouped communication lines are still remaining. This is illustrated in Fig. 3 where two sets 322, 323 of five ungrouped communication lines are remaining. In this case, steps 503, 504 are repeated thereby selecting pairs (L10, L11), (L9, L12), (L8, L13), (L7, L15) and (L6, L17) and assigning them according to the order 302, 303 to the respective P2MP groups G1 to G5.

According to an example embodiment, the order of the selecting step 503 alternates in direction, while the assigning of the groups is performed in the same order. For example, as shown in Fig. 3, in the first iteration, the communication line with the lowest spectral efficiency is selected from lowest spectral efficiency to highest spectral efficiency as indicated by direction 301 and combined with the communication line with the highest spectral efficiency by selecting it from highest spectral efficiency to lowest spectral efficiency as indicated by direction 304 and then assigned to the groups from G1 to G5. Then, in the second alternating iteration, the communication line with the lowest spectral efficiency is selected from highest spectral efficiency to lowest spectral efficiency as indicated by direction 302 and combined with the communication line with the highest spectral efficiency by selecting it from lowest spectral efficiency to highest spectral efficiency as indicated by direction 303 and then again assigned to the groups in the same consecutive order from G1 to G5. This alternating scheme may be advantageous when the communication lines are operated in a full duplex mode. By this the weakest group G1 containing the line L1 also comprises the two lines L10 and L11 with similar spectral efficiencies, which, in full duplex mode, increases the probability that these lines L10 and L11 are at similar distance to the access node and hence may experience high mutual NEXT. By grouping them together, their full duplex spectral efficiency increases, thereby freeing up spectrum for the weaker line L1. A similar effect is observed in the other group G5 with the lines L5 and L6 and with the lines L17 and L14.

When the iterative steps 503, 504 are concluded, it may be further verified whether there are a number of lines smaller than two times G that are not yet assigned to a group. In this case, further steps 506 and 507 are performed to assign the remaining number of lines R < 2*G to the G P2MP groups. If the number of remaining lines R is smaller or equal than the number of P2MP groups G, then each line of these R1 remaining lines is assigned to a separate P2MP group. Also, in this case, the order can either be from high-to-low or from low-to-high spectral efficiency. Preferably, these R1 remaining lines are added to those groups who have the highest overall spectral efficiency, i.e. they have the largest headroom for accommodating an additional line. If the remaining number of lines R is larger than the number of P2MP groups G, then a number of R1=minimum(2G-R, R) lines selected from lowest to highest spectral efficiency are individually assigned to different P2MP groups. Thereafter, the final number of remaining lines R2 = R - R1 is assigned in pairs to the different P2MP groups as described above (using subsets of low and high spectral efficiency). This allows further maximizing the minimum sustainable data rate of the communication lines.

The above described steps may be represented by the following italic pseudocode wherein comments are provided non-italic and between square brackets:

*N=total number of communication lines;* [constant]
*G=number of groups* [constant]
*L=group size* [constant]
*(N<=G\*L)* [condition]
*R := N* [temporal variable indicative for the number of remaining lines]
*While R >= 2\*G* [corresponds to condition 505]

*Pair G best with G worst lines in different P2MP groups* [corresponds to step 503 and 504]
*R := R-2G* [update number of remaining lines]

*End (while)*
*R1= min(2G-R;R);* [first set of remaining lines]
*Assign R1 worst lines to different groups;* [corresponds to step 506]
*R2 := R - R1;* [second set of remaining lines]
*If (R2 > 0) then (Assign the remaining R2 lines pairwise to the remaining groups)* [corresponds to step 508]

When all N communication lines have been assigned to the G P2MP groups, the process proceeds to the next step 508 wherein each line within the groups is allocated a portion of the communication bandwidth according to a frequency division access multiple access scheme, e.g. as illustrated in Fig. 2. This frequency allocation may further be performed separately for upstream and downstream communication when operating the communication lines according to a half-duplex time division scheme, or jointly for upstream and downstream communication within separate upstream and downstream sub-bands when operating the communication lines according to a frequency division half-duplexing scheme, or jointly for upstream and downstream communication within overlapping upstream and downstream bands when operating the communication lines according to a full-duplex scheme. In typical situations, and in case of FDMA, within a group, the lines with lower spectral efficiency are assigned to the lower frequency bands, and the lines with higher spectral efficiency are assigned the higher frequency bands.

A situation may occur when an additional $(N+1)^{th}$ communication line is to be added to an existing grouping. In such a case, the line characteristic of the additional communication line may be obtained and the steps 502 to 508 repeated thereby regrouping and assigning N+1 communication lines to G P2MP groups.

Alternatively, the additional communication line may be added to one of the existing G groups according to the line characteristic of this additional communication line. For example, the additional line may be added to the group which has on average the highest spectral efficiency.

Alternatively, one or more groups are reserved to accommodate a joining line (so called joining group). For example, in the first iteration, a group may not be assigned a line from the set of lines with the lowest spectral efficiency. In this way, a joining line can always be rapidly and intermediately assigned to a joining group regardless of the line's spectral efficiency. If the joining line has low spectral efficiency it can be placed in a joining group. If the joining line has high spectral efficiency, it may also be placed in another group that is not full. This may then be followed by a regrouping step that optimizes the grouping as well as frees up new joining groups.

The steps of Fig. 5 may be performed by one or more networking entities within a communication system 101, e.g. by an upstream network managing entity 150 or by a processing circuitry within the access node 100 itself.

By the above described grouping process, an FDMA allocation may be performed that results in a maximized sustainable data rate for all communication lines compared with other groupings, e.g. a random grouping. Furthermore, by decoupling the grouping process from the FDMA allocation, a complex joint optimization process that takes both the grouping and FDMA allocation into account is avoided. Because of this, the above described grouping and allocation is scalable to a large number of communication lines and groups. Furthermore, the above described grouping process may be performed during an initializing process of the communication lines when line characterization metrics such as the physical or electrical lengths are already known, but when more complex metrics for performing the FDMA allocation are not yet known. For example, when the communication lines are operated according to the G.mgfast or G.fast communication protocol, the grouping may be performed within less than 30 seconds during the initialization of the communication system.

Below, the effectiveness of the above described grouping and allocation is demonstrated. A P2MP grouping of N communication lines connected to N terminal nodes that are to be grouped into G P2MP groups is considered. For each group, a single terminal node of that group is allowed to communicate on a certain tone during a certain time slot. This implies that all the terminal nodes within a P2MP group share the same frequency and time resources. A particular problem arises when all terminal nodes of a P2MP group have a sudden large traffic load. In such case, the data rate performance of the terminal nodes can be significantly impacted as all terminal nodes share the same communication bandwidth. This scenario may be considered the worst scenario in a P2MP communication system. The per-group full load minimum sustainable rate $R^{g,sust}$ is defined as the data rate that can be achieved by all terminal nodes within a certain P2MP group $g$ when all terminal nodes are subject to full traffic load. The design objective is then to perform a grouping and allocation such that $R^{g,sust}$ is maximized, i.e. to maximize the quality of service, QoS, or user experience, QoE, under such full traffic load. The following definitions are used to further describe this optimization procedure for a downstream communication scenario:

- $G_g$ is the set of terminal nodes that belong to a P2MP group g;
- G is the total number of distinct P2MP groups, and each terminal node is to be assigned to a single group;

- $x_b^n = \{0,1\}$ is a binary FDMA and/or TDMA scheduling variable that indicates if a certain frequency band b is allocated to terminal node n for downstream reception and wherein a frequency band may refer to a single tone or a group of tones;

- $x^{n,g} = \{0,1\}$ is a binary grouping variable that indicates if terminal node $n$ is allocated to a group g for downstream reception;

- $f_s$ is a conversion factor between the total number of bits allocated to a terminal node and the corresponding data rate;

- $b_b^n$ is the downstream spectral efficiency of a user $n$ on a frequency band b, in case the frequency band corresponds to a single tone, this measure can refer to the (achievable) bit loading; and

- $R^n = f_s \sum_{b=1}^{B} b_b^n x_k^n$ is the data rate allocated to terminal node n under the applied FDMA and/or TDMA scheduling.

The below optimization procedure is further restricted to a downstream scenario but may be similarly applied in an upstream communication. With the above definitions and for a given grouping $G_g$, the per-group full load minimum sustainable rate can be formulated as the following optimization problem in function of the binary scheduling variables $x_b^n$ :

$$R^{g,sust} := \max \min_{n \in G_g} R^n \text{ subject to } \forall b, g: \sum_{n \in G_g} x_b^n \leq 1 \text{ and } \forall b, n: x_b^n \in \{0,1\},$$

wherein the objective function aims to maximize the minimum sustainable rate while considering the best possible FDMA scheduling and wherein the constraints model that only one terminal node of the considered P2MP group is active per tone at a certain time. Different groupings $G_g$, g = 1, ..., G, result in different values for $R^{g,sust}$. For a given group, the above problem can be formulated as a linear programming problem as follows:

$$\forall g: \quad R^{g,sust} := \max t \text{ subject to } \forall n: R^n \geq t$$

$$\text{and } \forall b, g: \sum_{n \in G_g} x_b^n \leq 1 \text{ and } \forall b, n: x_b^n \in \{0,1\},$$

wherein t is a dummy variable that replaces the minimum operation. The scheduling variables are discrete of nature, which makes the above problem difficult to solve. A further relaxation from $x_b^n \in \{0,1\}$ to $x_b^n = [0,1]$ results in a standard continuous linear programming problem. For a large number of tones, the solution of the relaxed problem is discrete of nature for more than 99% of the tones. The global design objective may then be formulated as to find the groupings that maximize the minimum of $R^{g,sust}$ for all groups:

$$\max \min_{g} R^{g,sust} \qquad (A)$$

Alternatively, one may also consider a ratio of the data rate $R^n$ versus a target rate $T^n$. The global joint grouping and FDMA problem may then also be formulated as the following binary non-convex optimization problem: maximize

$$\min_{n} \left\{ \frac{R^n}{R^{n,targ}} \right\}$$

s. t.

$$\forall b, g: \sum_{n=1}^{N} x_b^n x^{n,g} \leq 1 \text{ (FDMA constraint)}$$

*and*

$$\forall g: \sum_{n=1}^{N} x^{n,g} \leq L \quad \text{(L=max nb of terminal nodes per group)}$$

*and*

$$\forall n: \sum_{g=1}^{G} x^{n,g} \leq 1 \quad \text{(a terminal node belongs to 1 group)}$$

with

$$R^n = \sum_{b=1}^{B} b_b^n x_b^n \ , x_b^n \in \{0,1\}\ , x^{n,g} \in \{0,1\}$$

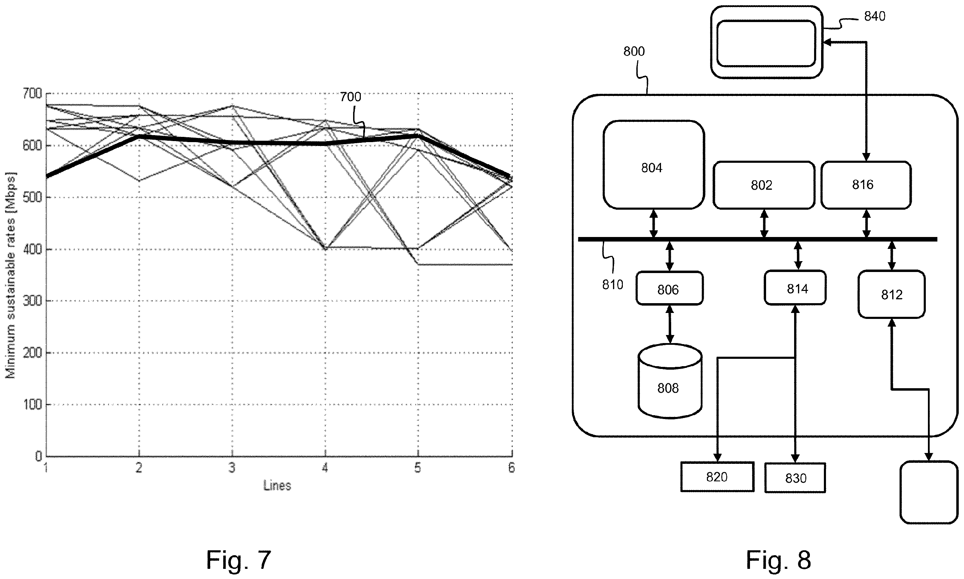

The above maximization process will now be illustrated by an example with 6 Digital Subscriber Line, DSL, loops, having respective loop lengths of 50m, 100m , 150m, 200m, 250m, and 300m. The corresponding bit loadings 601 to 606 of these loops are shown in Fig. 6. For this scenario, the minimum sustainable rates for all possible groupings with optimized FDMA allocations have been evaluated for a group size of two. The corresponding sustainable rate performances are shown in Fig. 7 for all grouping combinations with two terminal nodes. The thicker curve 700 corresponds to the sustainable rates obtained by maximizing the above objective (A). It can be seen that the minimum of the sustainable rates of the grouping indicated by the curve 700 is much higher (160 Mbps difference) compared to the worst performance, where the latter corresponds to the grouping {1,2},{3,4} and {5,6}. The optimal curve performance 700 corresponds to the grouping {1,6},{2,5} and {3,4}.

This result confirms the grouping process as described with reference to Fig. 5, i.e. that grouping long lines with short lines results maximized minimum sustainable rates. This grouping exploits the fact that long lines are active on the lower frequencies only, whereas short lines occupy a much larger frequency range. This allows achieving higher sustainable rates for both long and short lines, compared to grouping lines of similar loop lengths. For the above example, by the described grouping process, the minimum sustainable rates are 160 Mbps higher when compared to the worst case approach wherein communication lines of similar lengths are put in the same group and considering interleaved FDMA allocations. This grouping further indirectly reduces the contention probability under high traffic because all communication lines have higher sustainable rates.

Fig. 8 shows a suitable computing system 800 enabling to implement embodiments of the above described steps. Computing system 800 may in general be formed as a suitable general-purpose computer and comprise a bus 810, a processor 802, a local memory 804, one or more optional input interfaces 814, one or more optional output interfaces 816, a communication interface 812, a storage element interface 806, and one or more storage elements 808. Bus 810 may comprise one or more conductors that permit communication among the components of the computing system 800. Processor 802 may include any type of conventional processor or microprocessor that interprets and executes programming instructions. Local memory 804 may include a random-access memory (RAM) or another type of dynamic storage device that stores information and instructions for execution by processor 802 and/or a read only memory (ROM) or another type of static storage device that stores static information and instructions for use by processor 802. Input interface 814 may comprise one or more conventional mechanisms that permit an operator or user to input information to the computing device 800, such as a keyboard 820, a mouse 830, a pen, voice recognition and/or biometric mechanisms, a camera, etc. Output interface 816 may comprise one or more conventional mechanisms that output information to the operator or user, such as a display 840, etc. Communication interface 812 may comprise any transceiver-like mechanism such as for example one or more Ethernet interfaces that enables computing system 800 to communicate with other devices and/or systems. The communication interface 812 of computing system 800 may be connected to such another computing system by means of a local area network (LAN) or a wide area network (WAN) such as for example the internet. Storage element interface 806 may comprise a storage interface such as for example a Serial Advanced Technology Attachment (SATA) interface or a Small Computer System Interface (SCSI) for connecting bus 810 to one or more storage elements 808, such as one or more local disks, for example SATA disk drives, and control the reading and writing of data to and/or from these storage elements 808. Although the storage element(s) 808 above is/are described as a local disk, in general any other suitable computer-readable media such as a removable magnetic disk, optical storage media such as a CD or DVD, -ROM disk, solid state drives, flash memory cards, ... could be used.

As used in this application, the term "circuitry" may refer to one or more or all of the following:

(a) hardware-only circuit implementations such as implementations in only analog and/or digital circuitry and
(b) combinations of hardware circuits and software, such as (as applicable):

(i) a combination of analog and/or digital hardware circuit(s) with software/firmware and
(ii) any portions of hardware processor(s) with software (including digital signal processor(s)), software, and memory(ies) that work together to cause an apparatus, such as a mobile phone or server, to perform various functions) and

(c) hardware circuit(s) and/or processor(s), such as microprocessor(s) or a portion of a microprocessor(s), that requires software (e.g. firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in a server, a cellular network device, or other computing or network device.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

**Claims**

1. A network element (150, 800, 100) comprising at least one processor (802) and at least one memory (804) including computer program code, the at least one memory and computer program code configured to, with the at least one processor, cause the network element to:

- group (501-507) N communication lines (131-137, L1-L20) between an access node (100) and terminal nodes (111-117) into G point-to-multipoint, P2MP, groups (121-123, G1-G5) sharing a communication bandwidth (200); wherein the grouping further comprises:

- obtain (501) line characteristics indicative for a spectral efficiency of the respective communication lines over the communication bandwidth,
- select (503) G pairs of lines by forming said G pairs each comprising a first communication line with a low spectral efficiency selected from a first set of G communication lines (321, 421) with the lowest spectral efficiencies and a second communication line with a high spectral efficiency selected from a second set of G communication lines (324, 424) with the highest spectral efficiencies, and
- assign (504) each of the G pairs to a different group of the G P2MP groups.

**2.** The network element according to claim 1 wherein the spectral efficiency is further indicative for the information rate that is achievable over a respective communication line within a portion of or over the shared communication bandwidth.

**3.** The network element according to claim 1 or 2 wherein the line characteristics are related to at least one of:

- physical lengths of the respective communication lines;
- electrical lengths of the respective communication lines;
- data rates achievable over the respective communication lines;
- tone bit loadings (601-606) achievable over the respective communication lines; and
- channel characteristics of the respective communication lines.

**4.** The network element according to claim 1 or 3 wherein the line characteristics are obtained from transceivers (141-147) at the access node (100) and/or terminal nodes (111-117) connected to the respective communication lines.

**5.** The network element according to any of claims 1 to 4 wherein the at least one memory and computer program code are further configured to, with the at least one processor, cause the network element to weigh (502) the obtained line characteristics according to targeted data rates for the respective communication lines.

**6.** The network element according to any of claims 1 to 5 wherein the pairs are selected such that the first communication line is selected from lowest spectral efficiency to highest spectral efficiency (301) and combined with the second communication line selected from highest spectral efficiency to lowest quality spectral efficiency (304).

**7.** The network element according to any of claims 1 to 6 wherein the at least one memory and computer program code are further configured to, with the at least one processor, cause the network element to iteratively (503, 504, 505) select and assign a first communication line from the G communication lines (322, 422) with the lowest spectral efficiency together with a second communication line from the G communication lines (323, 423) with the highest spectral efficiency until all N lines are assigned, or, upon a last iteration, the remaining lines are individually assigned to the G groups.

**8.** The network element according to claim 7 wherein, for each iteration, the first communication line is selected from lowest spectral efficiency to highest spectral efficiency (401, 402) and combined with the second communication line selected from highest spectral efficiency to lowest spectral efficiency (404, 403).

**9.** The network element according to claim 7 wherein communication lines are selected and assigned such that iterations alternate between selecting the first communication line from lowest spectral efficiency to highest spectral efficiency (301) combined with selecting the second communication line from highest spectral efficiency to lowest spectral efficiency (304) and, in a next iteration, selecting the first communication line from highest spectral efficiency to lowest spectral efficiency (302) combined with selecting the second communication line from lowest spectral efficiency to highest spectral efficiency (303).

**10.** The network element according to any of claim 7 to 9 wherein communication lines are selected and assigned such that, upon the last iteration (507), remaining communication lines (422) with the lowest spectral efficiency are selected together with the remaining communication lines (423) with the highest spectral efficiency.

**11.** The network element according to claim 7 to 9 wherein communication lines are selected and assigned such that, upon the last iteration (506), remaining communication lines are individually assigned to different groups.

**12.** The network element according to any of claim 1 to 11 wherein the at least one memory and computer program code are further configured to, with the at least one processor, cause the network element to, after the grouping and upon joining of an additional communication line:

- obtain the line characteristic of the additional communication line;
- assign the additional communication line to one of the G P2MP groups according to the line characteristics of the communication lines.

13. The network element according to any of claim 1 to 11 wherein the at least one memory and computer program code are further configured to, with the at least one processor, cause the network element to, after the grouping and upon joining of an additional communication line, regroup the N+1 communication lines into the G point-to-multipoint, P2MP, groups.

14. The network element according to any of claim 1 to 13 wherein the at least one memory and computer program code are further configured to, with the at least one processor, cause the network element to allocate (508) frequency bands (211-213, 214-215, 216-217) and/or time slots to the communication lines in the respective G point-to-multipoint, P2MP, groups.

15. A method comprising:

   - grouping (503, 504) N communication lines (131-137, L1-L20) between an access node (100) and terminal nodes (111-117) into G point-to-multipoint, P2MP, groups (121-123, G1-G5) sharing a communication bandwidth (200);
   wherein the grouping further comprises:

      - obtaining (501) line characteristics indicative for a spectral efficiency of the respective communication lines over the communication bandwidth,
      - selecting (503) G pairs of lines by forming said G pairs each comprising a first communication line with a low spectral efficiency selected from a first set of the G communication lines (321, 421) with the lowest spectral efficiencies and a second communication line with a high spectral efficiency selected from a second set of G communication lines (324, 424) with the highest spectral efficiencies, and
      - assigning (504) each of the G pairs to a different group of the G P2MP groups.


## Patentansprüche

1. Netzwerkelement (150, 800, 100), das mindestens einen Prozessor (802) und mindestens einen Speicher (804), der einen Computerprogrammcode beinhaltet, umfasst, wobei der mindestens eine Speicher und der Computerprogrammcode dazu ausgelegt sind, das Netzwerkelement mit dem mindestens einen Prozessor zu Folgendem zu veranlassen:

   - Gruppieren (501-507) von N Kommunikationsleitungen (131-137, L1-L20) zwischen einem Zugangsknoten (100) und Anschlussknoten (111-117) in G Punkt-zu-Mehrpunkt(P2MP)-Gruppen (121-123, G1-G5), die eine Kommunikationsbandbreite (200) gemeinsam verwenden;
   wobei das Gruppieren ferner Folgendes umfasst:

      - Erhalten (501) von Leitungseigenschaften, die eine spektrale Effizienz der jeweiligen Kommunikationsleitungen über die Kommunikationsbandbreite anzeigen,
      - Auswählen (503) von G Paaren von Leitungen, die die G Paare bilden, von denen jedes eine erste Kommunikationsleitung mit einer niedrigen spektralen Effizienz, die aus einem ersten Satz von G Kommunikationsleitungen (321, 421) mit den niedrigsten spektralen Effizienzen ausgewählt ist, und eine zweite Kommunikationsleitung mit einer hohen spektralen Effizienz, die aus einem zweiten Satz von G Kommunikationsleitungen (324, 424) mit den höchsten spektralen Effizienzen ausgewählt ist, umfasst, und
      - Zuweisen (504) von jedem der G Paare zu einer anderen Gruppe der G P2MP-Gruppen.

2. Netzwerkelement nach Anspruch 1, wobei die spektrale Effizienz ferner die Informationsrate anzeigt, die über eine jeweilige Kommunikationsleitung über die gemeinsam verwendete Kommunikationsbandbreite oder in einem Abschnitt derselben erreichbar ist.

3. Netzwerkelement nach Anspruch 1 oder 2, wobei die Leitungseigenschaften mindestens eines von Folgendem betreffen:

      - physische Längen der jeweiligen Kommunikationsleitungen;
      - elektrische Längen der jeweiligen Kommunikationsleitungen;
      - Datenraten, die über die jeweiligen Kommunikationsleitungen erreichbar sind;

- Tonbitladungen (601-606), die über die jeweiligen Kommunikationsleitungen erreichbar sind; und
- Kanaleigenschaften der jeweiligen Kommunikationsleitungen.

4. Netzwerkelement nach Anspruch 1 oder 3, wobei die Leitungseigenschaften von Sendeempfängern (141-147) am Zugangsknoten (100) und/oder an den Anschlussknoten (111-117), die mit den jeweiligen Kommunikationsleitungen verbunden sind, erhalten werden.

5. Netzwerkelement nach einem der Ansprüche 1 bis 4, wobei der mindestens eine Speicher und der Computerprogrammcode ferner dazu ausgelegt sind, mit dem mindestens einen Prozessor das Netzwerkelement zu veranlassen, die erhaltenen Leitungseigenschaften gemäß angestrebten Datenraten für die jeweiligen Kommunikationsleitungen zu gewichten (502).

6. Netzwerkelement nach einem der Ansprüche 1 bis 5, wobei die Paare derart ausgewählt werden, dass die erste Kommunikationsleitung von einer niedrigsten spektralen Effizienz zu einer höchsten spektralen Effizienz (301) ausgewählt und mit der zweiten Kommunikationsleitung, die von einer höchsten spektralen Effizienz zu einer spektralen Effizienz einer niedrigsten Qualität (304) ausgewählt wird, kombiniert wird.

7. Netzwerkelement nach einem der Ansprüche 1 bis 6, wobei der mindestens eine Speicher und der Computerprogrammcode ferner dazu ausgelegt sind, mit dem mindestens einen Prozessor das Netzwerkelement zu veranlassen, aus den G Kommunikationsleitungen (322, 422) mit der niedrigsten spektralen Effizienz iterativ (503, 504, 505) eine erste Kommunikationsleitung zusammen mit einer zweiten Kommunikationsleitung der G Kommunikationsleitungen (323, 423) mit der höchsten spektralen Effizienz auszuwählen und zuzuweisen, bis alle N Leitungen zugewiesen sind oder nachdem die verbleibenden Leitungen nach einer letzten Iteration den G Gruppen einzeln zugewiesen wurden.

8. Netzwerkelement nach Anspruch 7, wobei die erste Kommunikationsleitung bei jeder Iteration von einer niedrigsten spektralen Effizienz zu einer höchsten spektralen Effizienz (401, 402) ausgewählt und mit der zweiten Kommunikationsleitung, die von einer höchsten spektralen Effizienz zu einer niedrigsten spektralen Effizienz (404, 403) ausgewählt wird, kombiniert wird.

9. Netzwerkelement nach Anspruch 7, wobei Kommunikationsleitungen derart ausgewählt und zugewiesen werden, dass Iterationen zwischen dem Auswählen der ersten Kommunikationsleitung von einer niedrigsten spektralen Effizienz zu einer höchsten spektralen Effizienz (301) in Kombination mit dem Auswählen der zweiten Kommunikationsleitung von einer höchsten spektralen Effizienz zu einer niedrigsten spektralen Effizienz (304) und, bei einer nächsten Iteration, dem Auswählen der ersten Kommunikationsleitung von einer höchsten spektralen Effizienz zu einer niedrigsten spektralen Effizienz (302) in Kombination mit dem Auswählen der zweiten Kommunikationsleitung von einer niedrigsten spektralen Effizienz zu einer höchsten spektralen Effizienz (303) abwechseln.

10. Netzwerkelement nach einem der Ansprüche 7 bis 9, wobei Kommunikationsleitungen derart ausgewählt und zugewiesen werden, dass verbleibende Kommunikationsleitungen (422) mit der niedrigsten spektralen Effizienz nach der letzten Iteration (507) zusammen mit den verbleibenden Kommunikationsleitungen (423) mit der höchsten spektralen Effizienz ausgewählt werden.

11. Netzwerkelement nach einem der Ansprüche 7 bis 9, wobei Kommunikationsleitungen derart ausgewählt und zugewiesen werden, dass verbleibende Kommunikationsleitungen nach der letzten Iteration (506) verschiedenen Gruppen einzeln zugewiesen werden.

12. Netzwerkelement nach einem der Ansprüche 1 bis 11, wobei der mindestens eine Speicher und der Computerprogrammcode ferner dazu ausgelegt sind, mit dem mindestens einen Prozessor das Netzwerkelement nach dem Gruppieren und nach dem Einbinden einer zusätzlichen Kommunikationsleitung zu Folgendem zu veranlassen:

- Erhalten der Leitungseigenschaft der zusätzlichen Kommunikationsleitung;
- Zuweisen der zusätzlichen Kommunikationsleitung zu einer der G P2MP-Gruppen gemäß den Leitungseigenschaften der Kommunikationsleitungen.

13. Netzwerkelement nach einem der Ansprüche 1 bis 11, wobei der mindestens eine Speicher und der Computerprogrammcode ferner dazu ausgelegt sind, mit dem mindestens einen Prozessor das Netzwerkelement zu veranlassen, nach dem Gruppieren und nach dem Einbinden die N+1 Kommunikationsleitungen neu in die jeweiligen G Punkt-zu-Mehrpunkt(P2MP)-Gruppen zu gruppieren.

14. Netzwerkelement nach einem der Ansprüche 1 bis 13, wobei der mindestens eine Speicher und der Computerprogrammcode ferner dazu ausgelegt sind, mit dem mindestens einen Prozessor das Netzwerkelement zu veranlassen, den Kommunikationsleitungen in den jeweiligen G Punkt-zu-Mehrpunkt(P2MP)-Gruppen Frequenzbänder (211-213, 214-215, 216-217) und/oder Zeitschlitze zuzuteilen (508).

15. Verfahren, das Folgendes umfasst:

   - Gruppieren (503, 504) von N Kommunikationsleitungen (131-137, L1-L20) zwischen einem Zugangsknoten (100) und Anschlussknoten (111-117) in G Punkt-zu-Mehrpunkt(P2MP)-Gruppen (121-123, G1-G5), die eine Kommunikationsbandbreite (200) gemeinsam verwenden;
   wobei das Gruppieren ferner Folgendes umfasst:

      - Erhalten (501) von Leitungseigenschaften, die eine spektrale Effizienz der jeweiligen Kommunikationsleitungen über die Kommunikationsbandbreite anzeigen,
      - Auswählen (503) von G Paaren von Leitungen, die die G Paare bilden, von denen jedes eine erste Kommunikationsleitung mit einer niedrigen spektralen Effizienz, die aus einem ersten Satz der G Kommunikationsleitungen (321, 421) mit den niedrigsten spektralen Effizienzen ausgewählt ist, und eine zweite Kommunikationsleitung mit einer hohen spektralen Effizienz, die aus einem zweiten Satz von G Kommunikationsleitungen (324, 424) mit den höchsten spektralen effizienten ausgewählt ist, umfasst, und
      - Zuweisen (504) von jedem der G Paare zu einer anderen Gruppe der G P2MP-Gruppen.

## Revendications

1. Elément de réseau (150, 800, 100) comprenant au moins un processeur (802) et au moins une mémoire (804) incluant un code de programme informatique, la au moins une mémoire et le code de programme informatique étant configurés pour, avec le au moins un processeur, amener l'élément de réseau à :

   - regrouper (501-507) N lignes de communication (131-137, L1-L20) entre un nœud d'accès (100) et des nœuds terminaux (111-117) en G groupes point à multipoint, P2MP, (121-123, G1-G5) partageant une largeur de bande de communication (200) ;
   dans lequel le regroupement comprend en outre :

      - l'obtention (501) de caractéristiques de ligne indicatives d'un rendement spectral des lignes de communication respectives sur la largeur de bande de communication,
      - la sélection (503) de G paires de lignes formant lesdites G paires comprenant chacune une première ligne de communication avec un rendement spectral faible sélectionnée parmi un premier ensemble de G lignes de communication (321, 421) avec les rendements spectraux les plus faibles et une seconde ligne de communication avec un rendement spectral élevé sélectionnée parmi un second ensemble de G lignes de communication (324, 424) avec les rendements spectraux les plus élevés, et
      - l'assignation (504) de chacune des G paires à un groupe différent des G groupes P2MP.

2. Elément de réseau selon la revendication 1, dans lequel le rendement spectral est en outre indicatif du débit d'informations qui est réalisable sur une ligne de communication respective dans une partie de ou sur la largeur de bande de communication partagée.

3. Elément de réseau selon la revendication 1 ou 2, dans lequel les caractéristiques de ligne sont liées à au moins l'un parmi :

   - des longueurs physiques des lignes de communication respectives ;
   - des longueurs électriques des lignes de communication respectives ;
   - des débits de données réalisables sur les lignes de communication respectives ;
   - des chargements de bits de tonalité (601-606) réalisables sur les lignes de communication respectives ; et
   - des caractéristiques de canal des lignes de communication respectives.

4. Elément de réseau selon la revendication 1 ou 3, dans lequel les caractéristiques de ligne sont obtenues à partir d'émetteurs-récepteurs (141-147) au niveau du nœud d'accès (100) et/ou des nœuds terminaux (111-117) connectés aux lignes de communication respectives.

5. Elément de réseau selon l'une quelconque des revendications 1 à 4, dans lequel la au moins une mémoire et le code de programme informatique sont en outre configurés pour, avec le au moins un processeur, amener l'élément de réseau à peser (502) les caractéristiques de ligne obtenues selon des débits de données ciblés pour les lignes de communication respectives.

6. Elément de réseau selon l'une quelconque des revendications 1 à 5, dans lequel les paires sont sélectionnées de sorte que la première ligne de communication soit sélectionnée d'un rendement spectral le plus faible à un rendement spectral le plus élevé (301) et combinée avec la seconde ligne de communication sélectionnée d'un rendement spectral le plus élevé à un rendement spectral de qualité la plus faible (304).

7. Elément de réseau selon l'une quelconque des revendications 1 à 6, dans lequel la au moins une mémoire et le code de programme informatique sont en outre configurés pour, avec le au moins un processeur, amener l'élément de réseau à sélectionner et assigner itérativement (503, 504, 505) une première ligne de communication parmi les G lignes de communication (322, 422) avec le rendement spectral le plus faible conjointement avec une seconde ligne de communication parmi les G lignes de communication (323, 423) avec le rendement spectral le plus élevé jusqu'à ce que la totalité des N lignes soient assignées, ou, lors d'une dernière itération, que les lignes restantes soient assignées individuellement aux G groupes.

8. Elément de réseau selon la revendication 7, dans lequel, pour chaque itération, la première ligne de communication est sélectionnée d'un rendement spectral le plus faible à un rendement spectral le plus élevé (401, 402) et combinée avec la seconde ligne de communication sélectionnée d'un rendement spectral le plus élevé à un rendement spectral le plus faible (404, 403).

9. Elément de réseau selon la revendication 7, dans lequel des lignes de communication sont sélectionnées et assignées de sorte que des itérations alternent entre la sélection de la première ligne de communication d'un rendement spectral le plus faible à un rendement spectral le plus élevé (301) combinée avec la sélection de la seconde ligne de communication d'un rendement spectral le plus élevé à un rendement spectral le plus faible (304) et, dans une itération suivante, la sélection de la première ligne de communication d'un rendement spectral le plus élevé à un rendement spectral le plus faible (302) combinée avec la sélection de la seconde ligne de communication d'un rendement spectral le plus faible à un rendement spectral le plus élevé (303) .

10. Elément de réseau selon l'une quelconque des revendications 7 à 9, dans lequel des lignes de communication sont sélectionnées et assignées de sorte que, lors de la dernière itération (507), des lignes de communication restantes (422) avec le rendement spectral le plus faible soient sélectionnées conjointement avec les lignes de communication restantes (423) avec le rendement spectral le plus élevé.

11. Elément de réseau selon les revendications 7 à 9, dans lequel des lignes de communication sont sélectionnées et assignées de sorte que, lors de la dernière itération (506), des lignes de communication restantes soient assignées individuellement à des groupes différents.

12. Elément de réseau selon l'une quelconque des revendications 1 à 11, dans lequel la au moins une mémoire et le code de programme informatique sont en outre configurés pour, avec le au moins un processeur, amener l'élément de réseau à, après le regroupement et lors de la jonction d'une ligne de communication additionnelle :

- obtenir la caractéristique de ligne de la ligne de communication additionnelle ;
- assigner la ligne de communication additionnelle à l'un des G groupes P2MP selon les caractéristiques de ligne des lignes de communication.

13. Elément de réseau selon l'une quelconque des revendications 1 à 11, dans lequel la au moins une mémoire et le code de programme informatique sont en outre configurés pour, avec le au moins un processeur, amener l'élément de réseau à, après le regroupement et lors de la jonction d'une ligne de communication additionnelle, regrouper les N+1 lignes de communication en les G groupes point à multipoint, P2MP.

14. Elément de réseau selon l'une quelconque des revendications 1 à 13, dans lequel la au moins une mémoire et le code de programme informatique sont en outre configurés pour, avec le au moins un processeur, amener l'élément de réseau à allouer (508) des bandes de fréquences (211-213, 214-215, 216-217) et/ou des créneaux temporels aux lignes de communication dans les G groupes point à multipoint, P2MP, respectifs.

15. Procédé comprenant :

- le regroupement (503-504) de N lignes de communication (131-137, L1-L20) entre un nœud d'accès (100) et des nœuds terminaux (111-117) en G groupes point à multipoint, P2MP, (121-123, G1-G5) partageant une largeur de bande de communication (200) ;
dans lequel le regroupement comprend en outre :

- l'obtention (501) de caractéristiques de ligne indicatives d'un rendement spectral des lignes de communication respectives sur la largeur de bande de communication,
- la sélection (503) de G paires de lignes formant lesdites G paires comprenant chacune une première ligne de communication avec un rendement spectral faible sélectionnée parmi un premier ensemble des G lignes de communication (321, 421) avec les rendements spectraux les plus faibles et une seconde ligne de communication avec un rendement spectral élevé sélectionnée parmi un second ensemble de G lignes de communication (324, 424) avec les rendements spectraux les plus élevés, et
- l'assignation (504) de chacune des G paires à un groupe différent des G groupes P2MP.

Fig. 1

Fig. 2

321 322 323 324

(L1)(L2)(L3)(L4)(L5) (L6)(L7)(L8)(L9)(L10) (L11)(L12)(L13)(L15)(L17) (L14)(L16)(L18)(L20)(L19)

G1 G2 G3 G4 G5   G5 G4 G3 G2 G1   G1 G2 G3 G4 G5   G5 G4 G3 G2 G1

→ 301   ← 302   → 303   ← 304

## Fig. 3

EP 3 713 143 B1

421 422 423 424

(L1)(L2)(L3)(L4)(L5) (L6)(L7)(L8) (L9)(L10)(L11) (L12)(L13)(L15)(L16)(L17)

G5 G4 G3 G2 G1   G3 G2 G1   G1 G2 G3   G1 G2 G3 G4 G5

← 401   ← 402   → 403   → 404

## Fig. 4

EP 3 713 143 B1

```
┌─────────────────────┐
│   OBTAIN LINE       │
│   CHARACTERISTICS   │
└─────────────────────┘ 501
          │
          ▼
┌─────────────────────┐
│   WEIGH LINE        │
│   CHARACTERISTICS   │
└─────────────────────┘ 502
          │
          ▼
┌─────────────────────┐
│   SELECT G SUBSETS  │◄───────┐
└─────────────────────┘ 503    │
          │                    │
          ▼                    │
┌─────────────────────┐        │
│  ASSIGN SUBSETS TO  │        │
│  GROUPS             │        │
└─────────────────────┘ 504    │
          │                    │
          ▼                    │
        ╱╲                     │
       ╱  ╲    2 X G           │
      ╱    ╲   LINES    yes    │
      ╲    ╱  REMAINING ───────┘
       ╲  ╱
        ╲╱  505
          │ no
          ▼
┌─────────────────────┐
│   ASSIGN R1 LINES   │
└─────────────────────┘ 506
          │
          ▼
┌─────────────────────┐
│   ASSIGN R2 LINES   │
└─────────────────────┘ 507
          │
          ▼
┌─────────────────────┐
│ FDMA/TDMA ALLOCATIONS│
└─────────────────────┘ 508
```

Fig. 5

Fig. 6

EP 3 713 143 B1

Fig. 7

Fig. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009014764 A1